# EUROPÄISCHE PATENTANMELDUNG

(11) **EP 0 611 879 A1**
(43) Veröffentlichungstag der Anmeldung: **24.08.1994**
(21) Anmeldenummer: 94100909.4
(22) Anmeldetag: 22.01.1994
(51) Int. Cl.: F02C 7/18, F02C 7/12

(54) **Verfahren zur Kühlung einer Gasturbinenanlage**

(30) Priorität: 18.02.1993 DE 4304989
(71) Anmelder: ABB Management AG, CH-5401 Baden (CH)
(72) Erfinder: Althaus, Rolf, Dr., CH-9230 Flawil (CH)

(57) **Zusammenfassung**

Bei einem Verfahren zur Kühlung einer Gasturbinenanlage, insbesondere einer Brennkammer (1) und einer Turbine (2), sind die Brennkammer (1) und die Turbine (2) zur Kühlung in Serie geschaltet. Vom Haupluftmassenstrom (6) wird vor dem Eintritt in die Brennkammer ein geringer Kühlluftmassenstrom (7) abgezweigt. Dieser kann einem Wärmetauscher (3) zugeführt werden, in dem dem Kühlluftmassenstrom (7) Wärmeenergie entzogen wird. Anschliessend wird der Kühlluftmassenstrom (7) zur Konvektionskühlung der Brennkammer (1) und danach zur Kühlung der Turbine (2) eingesetzt.

## Beschreibung

### Technisches Gebiet

Die Erfindung betrifft ein Verfahren zur Kühlung einer Gasturbinenanlage, insbesondere zur Kühlung der Brennkammer und der Turbine.

### Stand der Technik

Bekannt ist, dass in Gasturbinenanlagen zur Kühlung von Brennkammer und Turbine eine Parallelschaltung angewendet wird.

So wird z.B. zur Kühlung einer Brennkammerwand eine reine Konvektionskühlung angewendet, wobei die gesamte Kühlluft zwischen innerer und äusserer Brennkammerwand entlangströmt, und zwar entgegengesetzt zur Strömungsrichtung des Verbrennungsgases in der Brennkammmer, dabei aufgeheizt wird und danach der Brennkammer als Trägerluft für die Verbrennung zugeführt wird. Die Turbine wird dann durch zusätzliche Kühlluft gekühlt, d.h. der Gesamtkühlluftmassenstrom als Summe aus dem Kühlluftmassenstrom der Brennkammer und dem Kühlluftmassenstrom der Turbine ist relativ gross, so dass in Folge des hohen Kühlluftverbrauches der Wirkungsgrad der Gasturbinenanlage gering ist. Ein weiterer Nachteil besteht in den hohen NOₓ-Emissionen des Systems.

### Darstellung der Erfindung

Die Erfindung versucht, all diese Nachteile zu vermeiden. Ihr liegt die Aufgabe zugrunde, bei einer Gasturbinenanlage insbesondere die Brennkammer und die Turbine so zu kühlen, dass bei diesem System der Kühlluftverbrauch und dadurch die NOₓ-Emissionen minimiert werden.

Erfindungsgemäss wird dies dadurch erreicht, dass die Brennkammer und die Turbine zur Kühlung in Serie geschaltet sind, wobei vom heissen Hauptluftmassenstrom vor seinem Eintritt in die Brennkammer ein geringer Kühlluftmassenstrom abgezweigt wird, welcher zur Kühlung der Brennkammer und anschliessend zur Kühlung der Turbine eingesetzt wird.

Die Vorteile der Erfindung sind darin zu sehen, dass der Kühlluftverbrauch in dem Gasturbinensystem minimiert wird und dadurch der Wirkungsgrad der Anlage verbessert wird. Ausserdem werden im Vergleich zum Stand der Technik die NOₓ-Emissionen bei gleichen Turbineneintrittstemperaturen wesentlich reduziert.

Es ist besonders zweckmässig, wenn der Kühlluftmassenstrom an der Brennkammerwand in Gegenstromrichtung zur Trägerluft im Innern der Brennkammer entlangströmt.

Weiterhin ist es vorteilhaft, wenn der Kühlluftmassenstrom vor der Kühlung der Brennkammerwand einem Wärmetauscher zugeführt und dort gekühlt wird.

### Kurze Beschreibung der Zeichnung

In der Zeichnung sind zwei Ausführungsbeispiel der Erfindung dargestellt.

Es zeigen:
- Fig. 1: einen Teillängsschnitt durch die Nachbrennkammer und die Gasturbine, wobei die Strömungsrichtung der Kühlluft mit der Strömungsrichtung der Trägerluft übereinstimmt;
- Fig. 2: einen Teillängsschnitt durch die Nachbrennkammer und die Gasturbine, wobei die Strömungsrichtung der Kühlluft für die Brennkammerwand entgegengesetzt zur Strömungsrichtung der Trägerluft ist.

Es sind nur die für das Verständnis der Erfindung wesentlichen Elemente gezeigt. Nicht dargestellt sind von der Anlage beispielsweise das Abgasgehäuse der Gasturbine mit Abgasrohr und Kamin sowie der Verdichter. Die Strömungsrichtung der Arbeitsmittel ist mit Pfeilen bezeichnet.

### Weg zur Ausführung der Erfindung

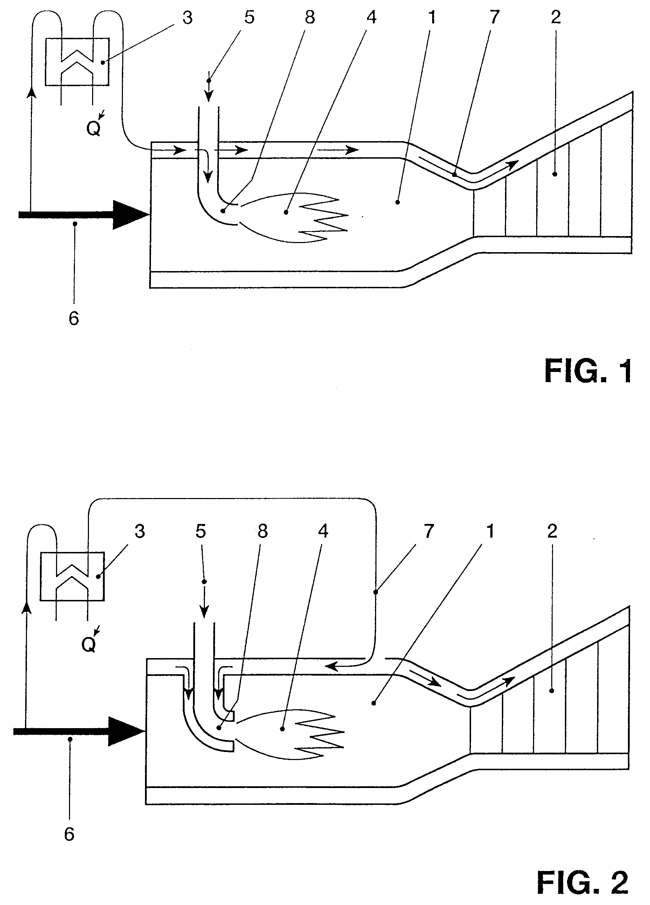

In Fig. 1 ist ein Teillängsschnitt durch die Nachbrennkammer 1 und die Turbine 2 einer Gasturbinenanlage zu sehen. Die Nachbrennkammer 1 ist in diesem Falle eine Ringbrennkammer. Das heisse Gas-Luft-Gemisch aus der Brennkammer mit einer Temperatur von beispielsweise 700 °C wird vor der Zufuhr zur Nachbrennkammer 1 aufgeteilt in einen Hauptluftmassenstrom 6, welcher der Nachbrennkammer 1 direkt zugeführt wird und einen Kühlluftmassenstrom 7, welcher vor der Zufuhr zur Kühlung der Brennkammerwand auf beispielsweise 400 °C in einem Wärmetauscher 3 gekühlt wird. Der Hauptluftmassenstrom 6 und der Kühlluftmassenstrom 7 haben in diesem Ausführungsbeispiel ein Verhältnis von ca. 9:1. Selbstverständlich kann der Kühlluftmassenstrom 7 auch ohne Durchgang durch den Wärmetauscher 3 sofort zur Kühlung der Nachbrennkammerwand benutzt werden.

Die Nachbrennkammer 1 und die Gasturbine 2 sind in Serie geschaltet, d.h., der Kühlluftmassenstrom 7 der Nachbrennkammer 1 ist etwa so gross wie der Kühlluftmassenstrom 7 der Turbine 2.

Ein Teil des Kühlluftmassenstromes 7 gelangt am Brennkammereintritt mit dem Brennstoff 5 in die Nachbrennkammer 1. An der Öllanze 8 bildet sich die Flamme 4 aus. Die Trägerluft wird dabei vorwiegend von dem heissen Hauptluftmassenstrom 6 gebildet.

Da der Gesamtkühlluftmassenstrom des Systems infolge der Serienschaltung von Nachbrennkammer 1 und Gasturbine 2 nur etwa so gross ist wie der Kühlluftmassenstrom 7 der Nachbrennkammer 1 bzw. der Turbine 2, wird bei einer derart betriebenen Anlage der Kühlluftverbrauch minimiert. Dies führt zu einer Erhöhung des Wirkungsgrades des Systems und zu einer Senkung der NOₓ-Werte im Vergleich zum Stand der Technik.

Ein zweites Ausführungsbeispiel wird anhand von Fig. 2 beschrieben. Im Unterschied zum ersten Ausführungsbeispiel bewegen sich die Kühlluft der Nachbrennkammer 1 an der Brennkammerwand und die Trägerluft im Inneren der Nachbrennkammer 1 im Gegenstromprinzip. Der Kühlluftmassenstrom 7 wird durch Wärmeabgabe der Brennkammerwand vorgewärmt und gelangt dann mit dem Brennstoff 5 in die Nachbrennkammer 1. An der doppelwandigen Öllanze 8 bildet sich die Flamme aus. Der Kühlluftmassenstrom 7 dient dann mit dem direkt zugeführten heissen Hauptluftmassenstrom 6 als Trägerluft. Der andere Teil der Kühlluft, der in die andere Richtung strömt, kühlt die Gasturbine 2.

Durch Vorwärmung der Trägerluft infolge vorheriger Nutzung als Kühlluft wird das Betriebslastverhalten der Anlage optimiert. Der Wirkunggsgrad des Systems wird ebenfalls erhöht und die NOₓ-Emissionswerte werden optimiert.

Selbstverständlich ist die Anwendung des Verfahrens nicht auf die Kühlung von Nachbrennkammern beschränkt.

### Bezugszeichenliste

- 1: Nachbrennkammer
- 2: Turbine
- 3: Wärmetauscher
- 4: Flamme
- 5: Brennstoff
- 6: Hauptluftmassenstrom
- 7: Kühlluftmassenstrom
- 8: Öllanze

## Patentansprüche

1. Verfahren zur Kühlung einer Gasturbinenanlage, insbesondere zur Kühlung einer Brennkammer (1) und einer Turbine (2), dadurch gekennzeichnet, dass die Brennkammer (1) und die Turbine (2) zur Kühlung in Serie geschaltet sind, wobei vom Hauptluftmassenstrom (6) vor seinem Eintritt in die Brennkammer (1) ein geringer Kühlluftmassenstrom (7) abgezweigt wird, welcher zur Kühlung der Brennkammer (1) und anschliessend zur Kühlung der Turbine (2) eingesetzt wird.

2. Verfahren nach Anspruch 1, dadurch gekennzeichnet, dass der Kühlluftmassenstrom (7) an der Brennkammerwand in Gegenstromrichtung zur Trägerluft im Innern der Brennkammer (1) entlangströmt.

3. Verfahren nach Anspruch 1, dadurch gekennzeichnet, dass der Kühlluftmassenstrom (7) vor der Kühlung der Brennkammer (1) einem Wärmetauscher (3) zugeführt wird und dort gekühlt wird.
